# EUROPÄISCHE PATENTSCHRIFT

(11) **EP 2 569 521 B1**
(45) Veröffentlichungstag und Bekanntmachung des Hinweises auf die Patenterteilung: **25.11.2015**
(21) Anmeldenummer: 11702265.7
(22) Anmeldetag: 09.02.2011
(51) Int. Cl.: F01M 11/10, F16N 29/00, F16N 29/04

(54) **ANLAGE UND VERFAHREN ZUM ERMITTELN VON MESSWERTEN VON GASEN UND/ODER EINES AEROSOLS FÜR EINE ARBEITSMASCHINE**
SYSTEM AND METHOD FOR DETERMINING READINGS OF GASES AND/OR AN AEROSOL FOR A MACHINE
INSTALLATION ET PROCÉDÉ POUR LA DÉTERMINATION DE VALEURS MESURÉES DE GAZ ET/OU D'UN AÉROSOL POUR UNE MACHINE DE TRAVAIL

(30) Priorität: 14.05.2010 EP 10162870
(43) Veröffentlichungstag der Anmeldung: 20.03.2013
(73) Patentinhaber: Schaller Automation Industrielle Automationstechnik GmbH & Co. KG, 66440 Blieskastel (DE)
(72) Erfinder: GNAUERT, Uwe, 66440 Blieskastel (DE)
(74) Vertreter: Schmauder & Partner AG Patent- & Markenanwälte VSP
(86) Internationale Anmeldenummer: PCT/EP2011/051885
(87) Internationale Veröffentlichungsnummer: WO 2011/141191

(56) Entgegenhaltungen:
- EP-A2- 0 777 041
- WO-A2-2007/140640
- CH-A- 349 831
- US-A- 3 207 026

## Beschreibung

### Technisches Gebiet

Die Erfindung betrifft eine Anlage mit Messvorrichtungen zum Ermitteln von Messwerten von Gasen und/oder eines Aerosols für eine Arbeitsmaschine, gemäss dem Oberbegriff von Anspruch 1, und ein Überwachungsverfahren, bei dem Messwerte von Gasen und/oder eines Aerosols in einer Arbeitsmaschine, insbesondere Messwerte der Aerosolkonzentration in einer Brennkraftmaschine, ermittelt werden.

### Stand der Technik

Die Überwachung von Gasen und Aerosolkonzentrationen, insbesondere von Schmierölnebel in Arbeitsräumen von Brennkraftmaschinen oder in Gehäusen von Leistungsgetrieben, ist zur Vermeidung von Schäden von erheblicher Bedeutung. Ein schneller Anstieg der Ölnebelkonzentration lässt nämlich auf Schäden, beispielsweise das Reissen eines Schmierfilms, schliessen. In Folge der dabei entstehenden Reibungswärme bilden sich Öldämpfe, die im Arbeitsraum zu Ölnebel kondensieren und so zu einem schnellen Anstieg der Ölnebelkonzentration führen. Wenn die daraus resultierende Gefahr schnell erkannt wird, können durch entsprechende Gegenmassnahmen wie z.B. ein Stilllegen der Maschine oder von einzelnen Maschinenkomponenten Explosionen und somit Gefahren für Personen und weitere Schäden an der Maschine vermieden werden. Es ist aber auch möglich, durch andere Sensoren bestimmte Gasanteile in einer solchen Arbeitsatmosphäre zu untersuchen.

Weiterhin können neben dem Abreissen des Schmierfilms in Lagern bei Kolbenmotoren zwischen dem Kolben und seiner Zylinderwand infolge schadhafter Kolbenringe, sogenannte Durchbläser, auftreten, die zu einer totalen Beschädigung des Kolben-/Zylinder-Aggregates führen ("Kolbenfresser"). Eine Erhöhung der Ölnebeldichte bei gleichzeitigem Temperaturanstieg in Folge der heissen Verbrennungsgase lassen auf einen solchen Durchbläser schliessen.

Erste Ansätze zur Messung der Ölnebelkonzentration sind aus der EP-A-0 071 391 und US 3 207 026 bekannt. In der EP-A-0 071 391 wird vorgeschlagen, mit Hilfe eines Gebläses das Aerosol aus dem Arbeitsraum durch eine Messkammer zu saugen und dort eine Reflektionsmessung mit Hilfe einer Strahlungsquelle und eines Strahlungssensors durchzuführen. Das dort vorgeschlagene Flügelradgebläse soll für eine Vielzahl von parallel angeordneten Kammern verwendet werden.

Schon in der WO-A-98/11331 wurden die Nachteile einer solchen Anordnung aufgezeigt. Neben dem erheblichen konstruktiven und betrieblichen Aufwand für die Anordnung hat sich der Einsatz eines Gebläses zum Absaugen als mangelhaft herausgestellt, so dass eine solche Lösung vermieden werden sollte. Durch das Absaugen wird überdies Schmutzluft durch das Rohrsystem gesaugt, dabei können Ölansammlungen in Form von Ölsäcken auftreten, die die Rohrleitungen verstopfen und die Funktion der Messvorrichtung erschweren und verunmöglichen.

Dagegen wird in der DD-A-239 474 und in der GB-A-2 166 232 vorgeschlagen, für jeden Arbeitsraum des Triebwerkes einer Brennkraftmaschine eine Sensoreinheit direkt im Inneren des jeweiligen Arbeitsraumes anzuordnen und über eine optische oder elektrische Übertragungsstrecke mit einer ausserhalb der Brennkraftmaschine befindlichen Auswerteeinheit zu verbinden. Eine solche Lösung ist jedoch mit dem Nachteil verbunden, dass die Basiskonzentration an Ölnebel und Spritzöl auf Dauer die Sensoren verschmutzen und somit auch zu Fehlalarmen führt.

In der bereits genannten WO-A-98/11331 wird dagegen vorgeschlagen, in jedem zu überwachenden Arbeitsraum eine Sensoreinheit mit einer Absaugung mittels einer Venturidüse vorzusehen. Eine solche Messvorrichtung arbeitet ohne mechanisch bewegte Teile und ist somit nahezu verschleissfrei.

Es hat sich jedoch herausgestellt, dass die allein durch die Kurbelbewegung der Kurbelwelle erzeugte Luftströmung keine ausreichende Durchströmung der Vakuumsaugdüse bewirkt, sodass die Wirksamkeit der Messvorrichtung nicht gewährleistet ist. In der WO 2007/140640 A wurde vorgeschlagen, eine gemeinsame externe Druckluftversorgung für die Versorgung aller Venturidüsen eines Motors bereitzustellen und mit geeigneten Versorgungsleitungen den einzelnen Messstellen zuzuführen. Dieser Ansatz ist aber mit dem Nachteil von aufwändigen Versorgungsleitungen behaftet.

Aus der DE 26 08 390 A1 ist es grundsätzlich bekannt, eine Messvorrichtung zum Anzeigen der Ölnebel- und/oder Ölrauchbildung in Triebräumen von Brennkraftmaschinen mit einer Luftstrahlpumpe auszubilden, wobei in der DE 26 08 390 A1 vorgeschlagen wird, die Entnahmeleitungen alle in eine gemeinsame Sammelkammer münden zu lassen. Dabei ist dann aber eine differenzierte Brennraumüberwachung mit mehreren Messstellen ausgeschlossen, bei dem der Schadensort lokalisiert werden kann.

### Darstellung der Erfindung

Aufgabe der Erfindung ist es, eine verbesserte Anlage mit Messvorrichtungen der eingangs genannten Art vorzuschlagen zum Ermitteln von Messwerten eines Gases und/oder Aerosols für eine Arbeitsmaschine. Dabei sollen die verschiedenen genommenen Proben zueinander unvermischt bleiben. Anderseits sollen die einzelnen Messstellen lediglich mit einem Kabel versorgt werden können. Weiterhin erscheint es essentiell, dass keine beweglichen Teile wie z.B. ein Drehlüfter etc. mit verminderter Akzeptanz in Bezug auf die Atmosphäre des Arbeitsraumes einer Brennkraftmaschine eingesetzt werden müssen.

Die Aufgabe der Erfindung wird durch eine Anlage nach Anspruch 1 gelöst. Dabei haben die Massnahmen der Erfindung zunächst einmal zur Folge, dass ohne bewegliche Teile, jedenfalls ohne einen Propeller, der durch die Atmosphäre einer Brennkraftmaschine schnell verschmutzt werden kann, eine Analyse des Gasgemisches und/oder eines Aerosols aus dem Arbeitsraum mit nur einem elektrischen Versorgungskabel möglich ist.

Zur Analyse eines Aerosols wird üblicherweise ein optischer Sensor zum Einsatz kommen. Grundsätzlich ist die Konvektionspumpe mit nur einer Heizung oder einer Kühlung möglich. Eine gute Umwälzleistung wird aber erreicht mit einer Heizung und einer Kühlung. Dabei sind die Sensoreinheit bzw. mehrere Sensoreinheiten im Strömungskanal zwischen der Heizung und der Kühlung angeordnet.

Bei einer vorteilhaften Ausführung ist das Heizelement der Heizung z.B. als herkömmliche Widerstandsheizung oder als Induktivheizung, und das Kühlelement der Kühlung als passiver Wärmetauscher gegen die Umgebung ausgestaltet. Dabei muss die Vorrichtung so ausgelegt werden, dass die Umgebungstemperatur eine ausreichende Temperaturdifferenz zulässt.

Eine alternative Ausgestaltung ist durch ein herkömmliches Heizelement und ein Peltierelement als Kühlelement gegeben, wobei das Peltierelement zur Kühlung verwendet wird und die - warme - Gegenseite des Peltierelementes über einen Wärmetauscher an die Umgebung gekoppelt ist.

Weiterhin ist es möglich, die Heizung und die Kühlung der Konvektionspumpe über ein Peltierelement zu realisieren, zum Aufheizen des Gases oder Aerosol-/Gasgemisches vor der Sensoreinheit und zum Kühlen hinter der Sensoreinheit.

Bei allen diesen Ausgestaltungen werden vorteilhafterweise der Ansaugort und der Rückführort benachbart sein. Der Strömungskanal kann durch zwei ineinander angeordnete Rohre ausgebildet sein, wobei dann der Ansaugort und der Rückführort konzentrisch angeordnet sind.

Wenn nur eine Heizung oder eine Kühlung vorgesehen ist, dann kann der Ansaugort oberhalb des Rückführortes angeordnet sein, wobei die Konvektionspumpe eine Kühlung umfasst oder es kann der Ansaugort unterhalb des Rückführortes angeordnet sein, wobei dann die Konvektionspumpe eine Heizung umfasst.

Durch die vorteilhafte Ausgestaltung eines Strömungskanals wird in vielen Fällen auf ein Ausscheidungsmittel zum Ausscheiden von groben Bestandteilen verzichtet werden können, ansonsten kann vor dem Sensor ein solches Ausscheidungsmittel - eine so genannte Pfeife oder ein Labyrinth zum Ausscheiden insbesondere von Öltröpfchen aus dem Ölnebel vorgesehen sein.

Vorteilhaft ist ein im Strömungskanal angeordneter Temperatursensor. In einer einfachen Ausführung ist ein Temperatursensor in der Wärmeseite des Strömungskanals angeordnet und die Anlage umfasst eine Warneinrichtung bei Überschreiten der vom Temperatursensor gemessenen Temperatur. Bei einer Temperatur von beispielsweise 150° wird die Anlage dann eine Warnung abgeben und der Motor wird allenfalls überprüft. Noch vorteilhafter ist es, wenn zwei Temperatursensoren zum Überwachen der Temperaturdifferenz zwischen der Wärmeseite und der Kühlseite des Strömungskanals vorgesehen sind. Damit kann die Temperaturdifferenz, die ja ein Mass und damit eine Überwachungsgrösse für die Strömung darstellt, als Kriterium für eine ausreichende Strömung verwendet werden. In einer weiteren Entwicklung ist eine Regelungseinrichtung zum Regeln der Leistung des Wärme- und Kühlelementes mittels der Temperaturdifferenz, der Temperatur in der Wärmeseite oder der Temperatur in der Kühlseite des Strömungskanals vorgesehen.

Die vorbenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und ihrer technischen Konzeption keinen besonderen Ausnahmebedingungen, so dass die in dem jeweiligen Anwendungsgebiet bekannten Auswahlkriterien uneingeschränkt Anwendung finden können.

### Kurze Beschreibung der Zeichnungen

Weitere Einzelheiten, Vorteile und Merkmale des Gegenstandes der vorliegenden Erfindung ergeben sich aus der nachfolgenden Beschreibung der dazu gehörenden Zeichnungen, in denen - beispielhaft - erfindungsgemässe Messvorrichtungen erläutert werden. In den Zeichnungen zeigt:
- Figur 1: eine Messvorrichtung in schematischer Darstellung am Arbeitsraum einer Brennkraftmaschine, gemäss einem ersten Ausführungsbeispiel der vorliegenden Erfindung, mit einer herkömmlichen Heizung und einer Kühlung mit einem passiven Wärmetauscher, welcher die Wärme an die Umgebung abführt;
- Figur 2: die Messvorrichtung gemäss Figur 1 in perspektivischer Ansicht von der Seite;
- Figur 3: eine Seitenansicht der die Messvorrichtung gemäss Figur 1;
- Figur 4: die Messvorrichtung gemäss Figur 1 als Schnittzeichnung von der Seite mit Blick auf die Rippen des Wärmetauschers im Strömungskanal;
- Figur 5: eine alternative Ausgestaltung der Messvorrichtung in schematischer Darstellung mit einer herkömmlichen Heizung und einer aktiven Kühlung, welche über ein Peltierelement und einen Wärmetauscher die Wärme an die Umgebung abführt;
- Figur 6: die Messvorrichtung gemäss Figur 5 in perspektivischer Ansicht von der Seite;
- Figur 7: eine Seitenansicht der die Messvorrichtung gemäss Figur 5;
- Figur 8: die Messvorrichtung gemäss Figur 5 als Schnittzeichnung von der Seite mit Blick auf die Rippen des Wärmetauschers im Strömungskanal;
- Figur 9: eine weitere, dritte Ausgestaltung der Messvorrichtung in schematischer Darstellung mit einer Heizung und Kühlung, die über ein Peltierelement (Wärmepumpe) zwischen den Wärmetauschern der Warm- und Kaltseite des Strömungskanals ausgebildet ist;
- Figur 10: die Messvorrichtung gemäss Figur 9 in perspektivischer Ansicht von der Seite;
- Figur 11: eine Seitenansicht der die Messvorrichtung gemäss Figur 9;
- Figur 12: die Messvorrichtung gemäss Figur 9 als Schnittzeichnung von der Seite mit Blick auf die Rippen des Wärmetauschers im Strömungskanal;

### Wege zur Ausführung der Erfindung

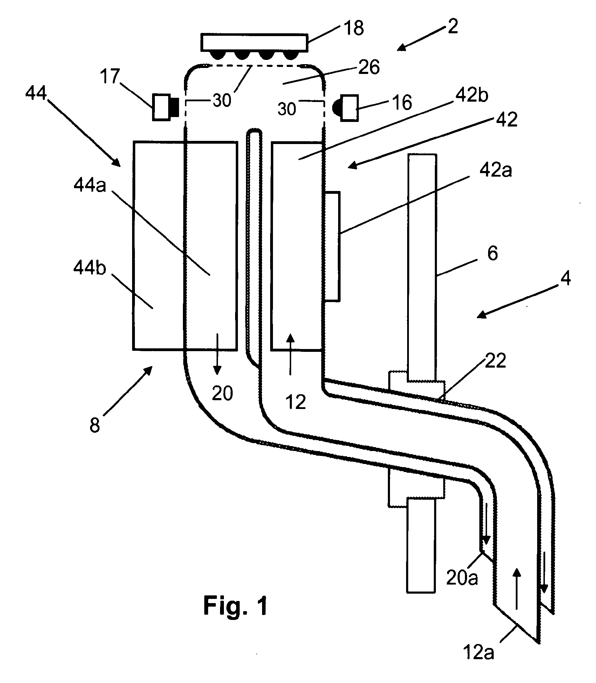

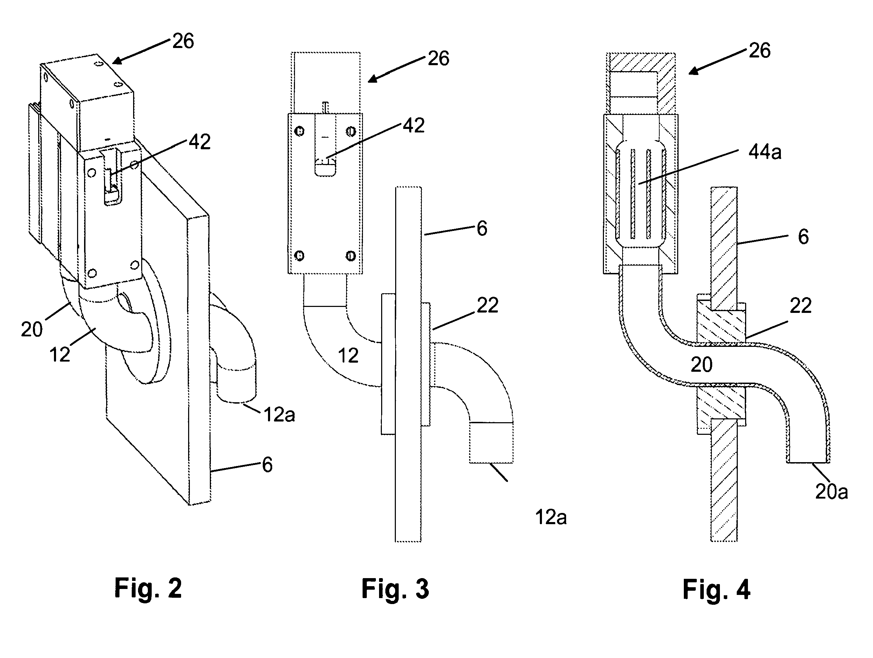

Die Figuren 1 bis 4 zeigen eine Messvorrichtung 2 der Anlage gemäss einem ersten Ausführungsbeispiel der vorliegenden Erfindung. Die Messvorrichtung ist mittels eines Flansches 22 in die Wand 6 der Arbeitsmaschine, im vorliegenden Fall in den Arbeitsraum 4 einer Brennkraftmaschine eingebaut. Der Flansch 22 umfasst eine Zuleitung 12 für ein Gas/Aerosolgemisch, welches durch die Pumpwirkung einer Konvektionspumpe 8 aus dem Arbeitsraum 4 angesaugt und mittels der Rückführungsleitung 20 wieder in den Arbeitsraum 4 zurückgeleitet wird.

Im vorliegenden Ausführungsbeispiel ist die Rückführleitung 20 nahe der Zuführleitung 12 angeordnet und damit fallen der Ansaugort 12a und der Rückführort 20a des Gas/Aerosolgemischs nahe zusammen.

Die beiden Leitungen 12, 20 weisen - vom Ansaug- bzw. Rückführtort aus gesehen - ab dem Flansch zunächst einmal einen im Wesentlichen waagerechten Bereich auf und gehen dann - nach einem Krümmer - in den eigentlichen Konvektionspumpbereich über.

Dieser umfasst in der Zuführungsleitung 12 eine Heizung 42 mit einem Widerstandsheizelement 42a und einem Wärmetauscher 42b und in der Rückführleitungen 20 eine Kühlung 44 mit einem Wärmetauscher 44a in der Rückführungsleitung sowie einen weiteren Wärmetauscher 44b, der die Wärme in die Umgebung abführt.

Durch die Heizung 42 mit dem Widerstandsheizelement 42a und dem Wärmetauscher 42b wird im Zuführbereich 12 das Gas/Aerosolgemisch erwärmt und steigt durch seine damit verbundene Ausdehnung in den eigentlichen Messbereich 26 auf. Andererseits wird das - bereits gemessene - Gas/Aerosolgemisch im Rückführbereich durch die Kühlung 44 den Wärmetauschern 44a und 44b abgekühlt und zieht sich zusammen, was eine Verstärkung des genannten Stromes bis hin zum Rückführort in den Arbeitsraum der Brennkraftmaschine bewirkt.

Diese Ausführung besticht dadurch, dass sie mit einem einzigen aktiven thermischen Element auskommt, nämlich einem herkömmlichen Heizelement. Dadurch ist diese Ausführung nicht nur sehr einfach aufzubauen und auch einfach und ohne grossen Aufwand zu betreiben, sondern auch besonders zuverlässig.

Der eigentliche Messbereich weist im hier vorliegenden Ausführungsbeispiel einerseits eine Transmissionslichtstrecke, andererseits eine Streulichtmesstrecke auf. Die Transmissionslichtstrecke wird durch die Lichtquelle 17, nämlich einer Licht emittierenden Diode und den optischen Sensor 16 realisiert, die von der Lichtquelle 17 transmittiert Lichtstärke wird gemessen. Die Streulichtstrecke wird durch die Lichtquelle 18 und auch für die Transmissionslichtstrecke genutzten Sensor 16 realisiert, das vom in der Lichtstrecke befindlichen Aerosol gestreute Licht wird gemessen. Die Messung von Transmission und Streulicht mit nur einem Sensor erfolgt dabei zeitlich intermittierend. Der Sensor bzw. die Lichtquellen sind mittels optischer Fenster 30, die an die optischen Eigenschaften der Sensoren bzw., der Lichtquelle angepasst sind, an den Messraum angekoppelt.

Die Temperatur der Warmseite kann über die Heizleistung der Widerstandsheizung abhängig von der Temperatur auf der Kaltseite so eingeregelt werden, dass - zumindest über einen weiten Bereich der Umgebungs- sowie Arbeitsraumtemperatur - eine konstante Temperaturdifferenz zwischen Warmund Kaltseite besteht, diese kann z.B. 50°C betragen, d.h. bei 45°C bzw. 70°C auf der Kaltseite beträgt die Temperatur der Warmseite 95°C bzw. 120°C. Eine mindest Differenztemperatur zwischen Warm- und Kaltseite ist einzuhalten, um eine ausreichende Strömung zu gewährleisten. Wird diese unterschritten, kann Alarm ausgelöst werden.

Als typische Werte für das hier beschriebene Ausführungsbeispiel wird die Heizung eine im Mittel zugeführte Leistung von ca. 5 Watt, eine Normalarbeitstemperatur von 120°C haben. Der Durchmesser der Zuführleitung ist ca. 15- 20mm.

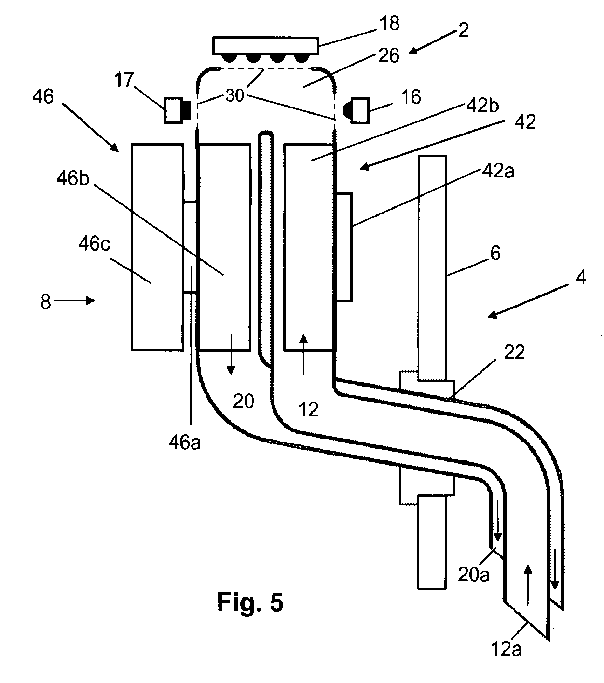

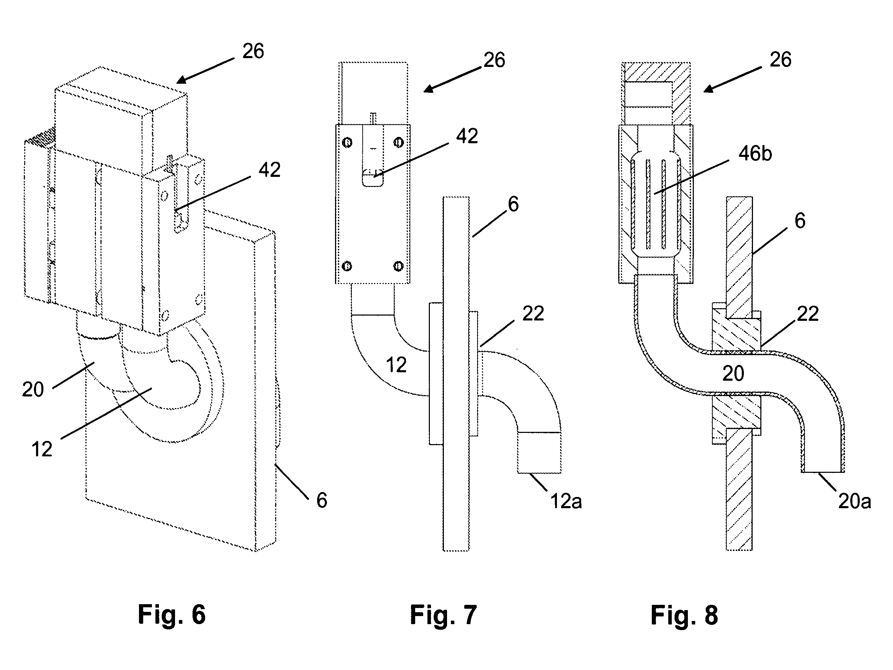

In den Figuren 5 bis 8 ist eine alternative Ausführungsform wiederum mit einer Heizung 42 mit einem ebenfalls als elektrische Widerstandsheizung ausgebildeten, herkömmlichen Heizelement 42a und einem Wärmetauscher 42b und einer aktiven Kühlung 46 dargestellt, in diesem Ausführungsbeispiel mit einem Peltierelement 46a mit daran gekoppeltem Wärmetauscher 46b und an die Umgebung gekoppeltem Wärmetauscher 46c. Zuführung bzw. Entzug der Wärme des Gas/Aerosolgemisches erfolgt über die Wärmetauscher 42b, 46b. Die Heizung ist wiederum so ausgebildet, dass das zuströmende Gas/Aerosolgemisch eine Temperatur von z.B. 120°C erreicht. Das Kühlelement ist in diesem Ausführungsbeispiel so ausgelegt, dass das zurückströmenden, bereits analysierte Gas/Aerosolgemisch auf eine Temperatur von ca. 30°C gekühlt und so eine Konvektionsströmung aufrecht erhalten wird. Die Warmseite des Peltierelementes erreicht in diesem Ausführungsbeispiel eine Temperatur von ca. 60°. Diese Ausführung hat den Vorteil, dass die Umgebungstemperatur höher liegen bzw. die Temperaturdifferenz zwischen Warm- und Kaltseite zu Gunsten einer höheren Pumpenleistung größer gewählt werden kann, allerdings geht dies zu Lasten des Aufwandes für die Kühlleistung.

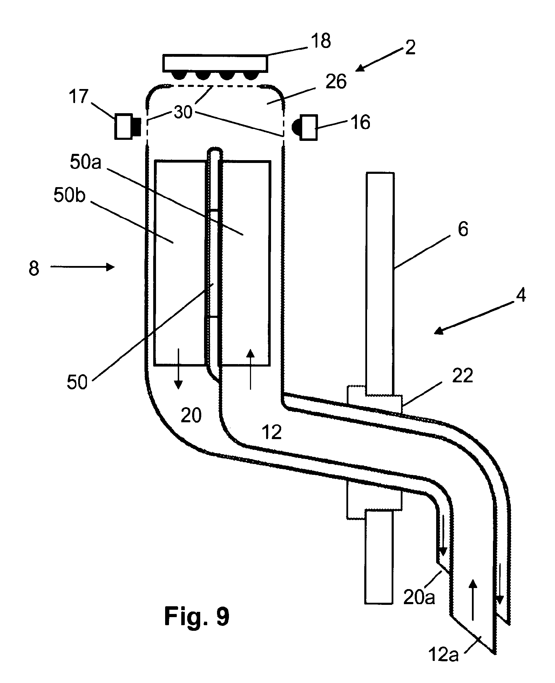

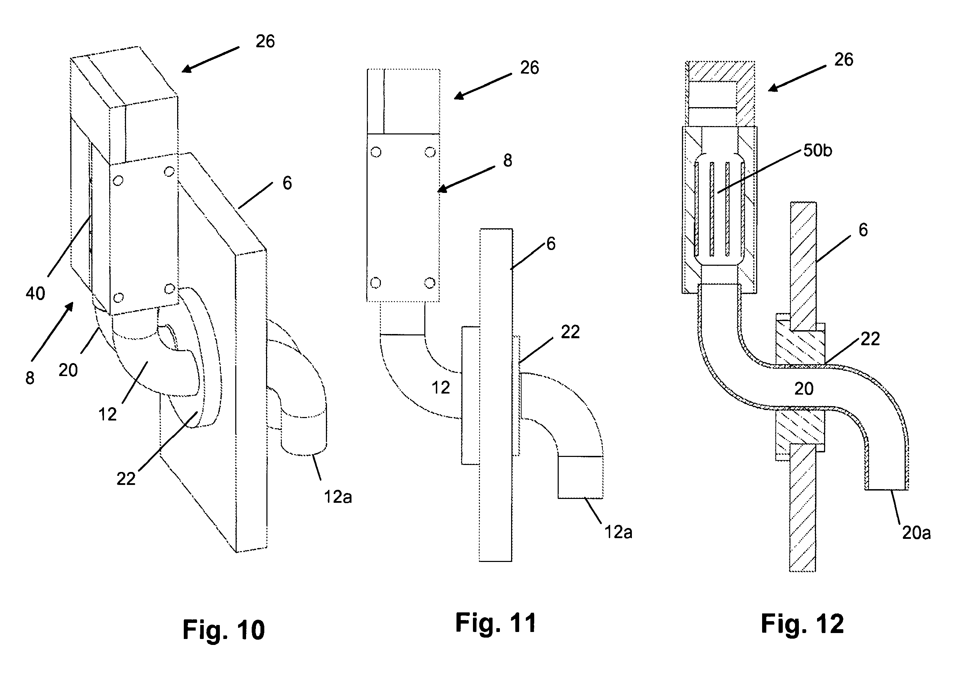

In einem weiteren Ausführungsbeispiel gemäss den Figuren 9 bis 12 wird sowohl die Heizung als auch die Kühlung mit einem Peltierelement 50 mit Wärme- bzw. - Kühlkopplung durch Wärmetauschelemente 50a und 50b bewirkt. Das Peltierelement 50 ist in diesem Ausführungsbeispiel in der Mitte zwischen den hier benachbarten Zu- und Rückführleitungen 12, 20 angeordnet und mittels zweier Wärmetauscher 50a, 50b - im Ausführungsbeispiel als Aluminiumstrangprofil mit Abmessungen von 50 x 29 x 25 mm - thermisch mit der Zuführleitung 12 und der Rückführleitung 20 gekoppelt. Das Peltierelement 50 ist so angeordnet, dass seine Heizseite zusammen mit dem Wärmetauscher 50a auf die Zuführung und seine Kühlseite zusammen mit dem Wärmetauscher 50b auf die Rückführung thermisch wirkt.

Als typische Werte für dieses Ausführungsbeispiel wird das Peltierelement 40 eine im Mittel zugeführte Leistung von 5 Watt, eine Maximaltemperatur von 150°C und Abmessungen von 20 x 20 x 3.6 mm haben. Der Durchmesser der Zuführleitung ist ca. 15-20mm und die Betriebstemperatur der Wärmetauschelemente 50a, 50b beträgt auf der Warmseite 50-60°C und auf der Kühlseite 30°C, jeweils über der Gas/Aerosoltemperatur im Arbeitsraum.

### Bezugszeichenliste

- 2: Messvorrichtung
- 4: Arbeitsraum
- 6: Wand der Arbeitsmaschine
- 8: Konvektionspumpe
- 12: Gas/Aerosolzuleitung
- 12a: Ansaugort
- 16: Sensor
- 17: Transmissions-Lichtquelle für den Sensor
- 18: Streulicht-Lichtquelle für den Sensor
- 20: Gas/Aerosol Rückführung
- 20a: Rückführort
- 22: Flansch
- 26: Messbereich
- 30: optische Fenster
- 42: Heizung
- 42a: Heizelement
- 42b: Wärmetauscher für die Heizung, an das Gas/Aerosol gekoppelt
- 44: Kühlung
- 44a: Wärmetauscher für die Kühlung, an das Gas/Aerosol gekoppelt
- 44b: Wärmetauscher für die Kühlung, an die Umgebung gekoppelt
- 46: Kühlung mit Peltierelement
- 46a: Peltierelement
- 46b: Wärmetauscher für die Kühlung, an das Gas/Aerosol und das Peltierelement gekoppelt
- 46c: Wärmetauscher für die Kühlung, an die Umgebung und das Peltierelement gekoppelt
- 50: Peltierelement
- 50a: Wärmetauscher für die Heizung, an das Gas/Aerosol gekoppelt
- 50b: Wärmetauscher für die Kühlung, an das Gas/Aerosol gekoppelt

## Patentansprüche

1. Anlage zur Überwachung der Arbeitsraumatmosphäre einer Arbeitsmaschine, insbesondere im Arbeitsraum einer Brennkraftmaschine, durch die Anordnung zumindest einer Messvorrichtung (2) zum Ermitteln von Messwerten für ein Gas und/oder ein Aerosol im Arbeitsraum (4) der Arbeitsmaschine, wobei die Anlage einen Strömungskanal (12; 20) aufweist, der an einem Ansaugort (12a) zum Ansaugen eines Gases oder Aerosol-/Gasgemisches aus dem Arbeitsraum (4) der Arbeitsmaschine (6) und an einem Rückführort (20a) zum Rückführen des Gases oder Aerosol-/Gasgemisches in den Arbeitsraum (4) der Arbeitsmaschine mit dem Arbeitsraum verbunden ist, wobei eine Sensoreinheit (16; 17; 18) zum Ermitteln der Messwerte in einem Messbereich (26) des Strömungskanals angeordnet ist, und eine Elektronikeinrichtung dem Betrieb der Sensoreinheit (16; 17; 18) zugeordnet ist, **dadurch gekennzeichnet, dass** im Strömungskanal eine Konvektionspumpe (8) angeordnet ist, wobei die Konvektionspumpe (8) zumindest eine Heizung (42; 50) und/oder Kühlung (44; 46; 50) umfasst.

2. Anlage nach Anspruch 1, **dadurch gekennzeichnet, dass** die Sensoreinheit zumindest einen optischen Sensor (16) zur Aerosolanalyse umfasst.

3. Anlage nach Anspruch 1 oder 2, **dadurch gekennzeichnet, dass** die Anlage eine Heizung (42; 50) und eine Kühlung (44; 46; 50) umfasst.

4. Anlage nach Anspruch 3, **dadurch gekennzeichnet, dass** der Messbereich (26) im Strömungskanal zwischen der Heizung (42; 50) und der Kühlung (44; 46; 50) angeordnet ist.

5. Anlage nach Anspruch 4, **dadurch gekennzeichnet, dass** die Heizung (42) der Konvektionspumpe (8) ein elektrisches Widerstandselement (42a) oder ein elektrisches Induktivelement und einen Wärmetauscher (42b) vor der Sensoreinheit (16, 17, 18) zum Aufheizen des Gases oder Aerosol-/Gasgemisches und die Kühlung (44) der Konvektionspumpe (8) einen passiven Wärmetauscher (44a, 44b) mit thermischem Anschluss an die Umgebung zum Kühlen des Gases oder Aerosol-/Gasgemisches hinter der Sensoreinheit (16, 17, 18) umfasst.

6. Anlage nach Anspruch 4, **dadurch gekennzeichnet, dass** die Heizung (42) der Konvektionspumpe (8) ein elektrisches Widerstandselement (42a) oder ein elektrisches Induktivelement und einen Wärmetauscher (42b) vor der Sensoreinheit (16, 17, 18) zum Aufheizen des Gases oder Aerosol-/Gasgemisches und die Kühlung (46) der Konvektionspumpe (8) eine Kühlung (46) des Gases oder Aerosol-/Gasgemisches hinter der Sensoreinheit (16, 17, 18), mit einem Peltierelement (46a) und einem Wärmetauscher (46b) mit thermischem Anschluss an das zu kühlende Gas oder Aerosol-/Gasgemisch sowie einem Wärmetauscher (46c) mit thermischem Anschluss an die Umgebung umfasst.

7. Anlage nach Anspruch 4, **dadurch gekennzeichnet, dass** die Heizung und Kühlung der Konvektionspumpe (8) mittels eines Peltierelementes (50) und Wärmetauschern (50a, 50b) ausgebildet ist, wobei ein Wärmetauscher (50a) zum Heizen vor und ein Wärmetauscher (50b) zum Kühlen nach der Sensoreinheit (16, 17, 18) des Gases oder Aerosol-/Gasgemisches angeordnet sind und eine Seite des Peltierelements (50) an den Wärmetauscher (50a) zum Aufheizen und die andere Seite des Peltierelements (50) an den Wärmetauscher (50b) zum Kühlen gekoppelt ist.

8. Anlage nach einem der Ansprüche 1 bis 7, **dadurch gekennzeichnet, dass** der Ansaugort (12a) und der Rückführort (20a) benachbart sind.

9. Anlage nach einem der Ansprüche 1 bis 8, **dadurch gekennzeichnet, dass** der Strömungskanal (12; 20) im Bereich der Zuführung und der Rückführung durch zwei ineinander angeordnete Rohre ausgebildet ist.

10. Anlage nach Anspruch 8, **dadurch gekennzeichnet, dass** der Ansaugort und der Rückführort (12a; 20a) konzentrisch angeordnet sind.

11. Anlage nach einem der Ansprüche 1 oder 2, **dadurch gekennzeichnet, dass** der Ansaugort oberhalb oder unterhalb des Rückführortes angeordnet ist, wobei die Konvektionspumpe ein Kühlelement bzw. ein Heizelement umfasst.

12. Anlage nach einem der Ansprüche 1 bis 11, **dadurch gekennzeichnet, dass** der Strömungskanal weiterhin Ausscheidungsmittel zum Ausscheiden von groben Bestandteilen, insbesondere von Öltröpfchen aus dem Ölnebel, aufweist.

13. Anlage nach einem der Ansprüche 1 bis 12, **gekennzeichnet durch** zumindest einen im Strömungskanal angeordneten Temperatursensor, wobei der zumindest eine Temperatursensor vorzugsweise in der Wärmeseite des Strömungskanals angeordnet ist und die Anlage eine Warneinrichtung umfasst, die beim Überschreiten eines Schwellentemperaturwerts Warnung oder Alarm auslöst.

14. Anlage nach Anspruch 13, **dadurch gekennzeichnet, dass** zwei Temperatursensoren zum Überwachen der Temperaturdifferenz zwischen der Wärmeseite und der Kühlseite des Strömungskanals vorgesehen sind.

15. Anlage nach einem der Ansprüche 13 oder 14, **gekennzeichnet durch** eine Regelungseinrichtung zum Regeln der Leistung des Wärme- und Kühlelementes mittels der Temperaturdifferenz, der Temperatur in der Wärmeseite oder der Temperatur in der Kühlseite des Strömungskanals.

## Claims

1. A system for monitoring the working area atmosphere of an operating engine, in particular in the working area of an internal combustion engine, by the arrangement of at least one measuring device (2) for determining readings for a gas and/or an aerosol in the working area (4) of the operating engine, wherein the system comprises a flow channel (12; 20) that is connected with the working area at a suction point (12a) for drawing in a gas or an aerosol/gas mixture from the working area (4) of the operating engine (6) and at a recovery point (20a) for feeding back the gas or the aerosol/gas mixture into the working area (4) of the machine, wherein a sensor unit (16; 17; 18) for determining the readings is arranged in a measuring region (26) of the flow channel, and an electronics device is associated to the operation of the sensor unit (16; 17; 18), **characterized in that** in the flow channel there is arranged a convection pump (8), wherein the convection pump (8) comprises at least one heating device (42; 50) and/or cooling device (44; 46; 50).

2. The system according to claim 1, **characterized in that** the sensor unit comprises at least one optical sensor (16) for aerosol analysis.

3. The system according to claim 1 or 2, **characterized in that** the system comprises a heating device (42; 50) and a cooling device (44; 46; 50).

4. The system according to claim 3, **characterized in that** the measuring region (26) is arranged in the flow channel between the heating device (42; 50) and the cooling device (44; 46; 50).

5. The system according to claim 4, **characterized in that** the heating device (42) of the convection pump (8) comprises an electrical resistance element (42a) or an electrical inductive element and a heat exchanger (42b) before the sensor unit (16, 17, 18) for heating the gas or the aerosol/gas mixture, and that the cooling device (44) of the convection pump (8) comprises a passive heat exchanger (44a, 44b) with a thermal connection to the environment for cooling the gas or the aerosol/gas mixture behind the sensor unit (16, 17, 18).

6. The system according to claim 4, **characterized in that** the heating device (42) of the convection pump (8) comprises an electrical resistance element (42a) or an electrical inductive element and a heat exchanger (42b) in front of the sensor unit (16, 17, 18) for heating the gas or the aerosol/gas mixture, and that the cooling device (46) of the convection pump (8) comprises a cooling device (46) for the gas or the aerosol/gas mixture behind the sensor unit (16, 17, 18), with a peltier element (46a) and a heat exchanger (46b) with a thermal connection to the gas or the aerosol/gas mixture to be cooled and a heat exchanger (46c) with a thermal connection to the environment.

7. The system according to claim 4, **characterized in that** the heating device and the cooling device of the convection pump (8) are configured with a peltier element (50) and heat exchangers (50a, 50b), wherein a heat exchanger (50a) for heating is arranged in front of and a heat exchanger (50b) for cooling is arranged behind the sensor unit (16, 17, 18) of the gas or aerosol/gas mixture, and wherein one side of the peltier element (50) is coupled to the heat exchanger (50a) for heating and the other side of the peltier element (50) is coupled to the heat exchanger (50b) for cooling.

8. The system according to any one of claims 1 to 7, **characterized in that** the suction point (12a) and the recovery point (20a) are adjacent to each other.

9. The system according to any one of claims 1 to 8, **characterized in that** the flow channel (12; 20) in the region of the feed and the recovery is formed by means of two concentrically arranged pipes.

10. The system according to claim 8, **characterized in that** the suction point and the recovery point (12a; 20a) are concentrically arranged.

11. The system according to any one of claims 1 or 2, **characterized in that** the suction point is arranged above or below the recovery point, the convection pump comprising a cooling element and a heating element, respectively.

12. The system according to any one of claims 1 to 11, **characterized in that** the flow channel further comprises separation means for separating off coarse components, particularly oil droplets, from the oil mist.

13. The system according to any one of claims 1 to 12, **characterized by** at least one temperature sensor arranged in the flow channel, wherein the at least one temperature sensor is preferably arranged in the heating side of the flow channel, and wherein the system comprises a warning device that triggers a warning or an alarm when a threshold temperature value is exceeded.

14. The system according to claim 13, **characterized in that** two temperature sensors for monitoring the temperature difference between the heating side and the cooling side of the flow channel are provided.

15. The system according to any one of claims 13 or 14, **characterized by** a controlling device for controlling the power of the heating element and the cooling element by means of the temperature difference, the temperature at the heating side or the temperature at the cooling side of the flow channel.

## Revendications

1. Installation permettant de surveiller l'atmosphère d'une chambre de travail d'une machine de travail en particulier dans la chambre de travail d'un moteur à combustion interne par le montage d'au moins un dispositif de mesure (2) permettant de déterminer des valeurs de mesure pour un gaz et/ou un aérosol dans la chambre de travail (4) de la machine de travail, l'installation comportant un canal d'écoulement (12, 20) qui est relié à la chambre de travail au niveau d'un emplacement d'aspiration (12a) pour permettre d'aspirer un gaz ou un mélange aérosol / gaz provenant de la chambre de travail (4) de la machine de travail (6) et d'un emplacement de renvoi (20a) pour permettre de renvoyer le gaz ou le mélange aérosol/gaz dans la chambre de travail (4) de la machine de travail, une unité de détection (16, 17, 18) permettant de déterminer les valeurs de mesure étant montée dans une première zone de mesure (26) du canal d'écoulement, et un dispositif électronique étant associé au fonctionnement de l'unité de détection (16, 17, 18),
**caractérisée en ce que**
dans le canal d'écoulement est montée une pompe à convection (8), cette pompe à convection (8) comprenant au moins un élément de chauffage (42, 50) et/ou au moins un élément de refroidissement (44, 46, 50).

2. Installation conforme à la revendication 1,
**caractérisée en ce que**
l'unité de détection comprend au moins un détecteur optique (16) pour permettre l'analyse de l'aérosol.

3. Installation conforme à la revendication 1 ou 2,
**caractérisée en ce que**
l'installation comprend un élément de chauffage (42, 50) et un élément de refroidissement (44, 46, 50).

4. Installation conforme à la revendication 3,
**caractérisée en ce que**
la zone de mesure (26) est située dans le canal d'écoulement entre l'élément de chauffage (42, 50) et l'élément de refroidissement (44, 46, 50).

5. Installation conforme à la revendication 4,
**caractérisée en ce que**
l'élément de chauffage (42) de la pompe à convection (8) comprend un élément résistant électrique (42a) ou un élément inductif électrique et un échangeur de chaleur (42b) en avant de l'unité de détection (16, 17, 18) pour permettre de chauffer le gaz ou le mélange aérosol/gaz, et l'élément de refroidissement (44) de la pompe à convection (8) comprend un échangeur de chaleur passif (44a, 44b) avec une connexion thermique avec l'environnement pour permettre de refroidir le gaz ou le mélange aérosol/gaz en arrière de l'unité de détection (16, 17, 18).

6. Installation conforme à la revendication 4,
**caractérisée en ce que**
l'élément de chauffage (42) de la pompe à convection (8) comprend un élément résistant électrique (42a) ou un élément inductif électrique et un échangeur de chaleur (42b) en avant de l'unité de détection (16, 17, 18) pour permettre de chauffer le gaz ou le mélange aérosol/gaz, et l'élément de refroidissement (46) de la pompe à convection (8) comprend un élément de refroidissement (46) du gaz ou du mélange aérosol/gaz en arrière de l'unité de détection (16, 17, 18) comportant un élément Peltier (46a) et un échangeur de chaleur (46b) avec une connexion thermique avec le gaz ou au mélange aérosol/gaz à refroidir ainsi qu'un échangeur de chaleur (46c) avec une connexion thermique avec l'environnement.

7. Installation conforme à la revendication 4,
**caractérisée en ce que**
l'élément de chauffage et l'élément de refroidissement de la pompe à convection (8) sont réalisés au moyen d'un élément Peltier (50) et d'échangeurs de chaleur (50a, 50b), un échangeur de chaleur (50a) de chauffage étant monté en avant de l'unité de détection (16, 17, 18) du gaz ou du mélange aérosol/gaz, tandis qu'un échangeur de chaleur (50b) de refroidissement est monté en arrière de cette unité, et un côté de l'élément Peltier (50) est couplé à l'échangeur de chaleur (50a) de chauffage tandis que l'autre côté de l'élément Peltier (50) est couplé à l'échangeur de chaleur (50b) de refroidissement.

8. Installation conforme à l'une des revendications 1 à 7,
**caractérisé en ce que**
l'emplacement d'aspiration (12a) et l'emplacement de renvoi (20a) sont voisins.

9. Installation conforme à l'une des revendications 1 à 8,
**caractérisée en ce que**
le canal d'écoulement (12, 20) est formé par deux tuyaux montés l'un dans l'autre dans la zone de l'alimentation et dans la zone de renvoi.

10. Installation conforme à la revendication 8,
**caractérisée en ce que**
l'emplacement d'aspiration et l'emplacement de renvoi (12a, 20a) sont concentriques.

11. Installation conforme à l'une des revendications 1 et 2,
**caractérisée en ce que**
l'emplacement d'aspiration est situé au-dessus ou au-dessous de l'emplacement de renvoi, la pompe convection comprenant un élément de refroidissement ou un élément de chauffage.

12. Installation conforme à l'une des revendications 1 à 11,
**caractérisée en ce que**
le canal d'écoulement comprend en outre des moyens de séparation pour permettre de séparer des composants grossiers, en particulier des petites gouttes d'huile pour les extraire du brouillard d'huile.

13. Installation conforme à l'une des revendications 1 à 12,
**caractérisée par**
au moins un capteur de température monté dans le canal d'écoulement, ce capteur de température étant de préférence situé du côté chaud du canal d'écoulement et l'installation comprenant un dispositif d'avertissement déclenchant un avertissement ou une alarme en présence d'un dépassement d'une valeur de température de seuil.

14. Installation conforme à la revendication 13,
**caractérisée en ce qu'**
il est prévu deux capteurs de température pour permettre de surveiller la différence de température entre le côté chaud et le côté froid, du canal d'écoulement.

15. Installation conforme à l'une des revendications 13 et 14,
**caractérisée par**
un dispositif de régulation pour permettre de réguler la puissance de l'élément de chauffage et de l'élément de refroidissement au moyen de la différence de température, de la température du côté chaud ou de la température du côté froid du canal d'écoulement.
